# EUROPÄISCHE PATENTSCHRIFT

(11) **EP 0 984 658 B1**
(45) Veröffentlichungstag und Bekanntmachung des Hinweises auf die Patenterteilung: **08.06.2011**
(21) Anmeldenummer: 99440230.3
(22) Anmeldetag: 20.08.1999
(51) Int. Cl.: H04Q 11/04, H04L 12/28

(54) **Telekommunikationssystem mit Vermittlungseinrichtung und Datenkonzentrator für den Zugang zum Internet**
Telecommunication system with switching device and data concentrator for access to Internet
Système de télécommunication avec commutateur et concentrateur de données pour l'accès vers Internet

(30) Priorität: 04.09.1998 DE 19840329
(43) Veröffentlichungstag der Anmeldung: 08.03.2000
(60) Teilanmeldung: 10185111.1
(73) Patentinhaber: Naxos Data LLC, Las Vegas, NV 89119 (US)
(72) Erfinder: Rothenhöfer, Karl, 71229 Leonberg (DE); König, Günther, Dr., 70825 Korntal (DE); Kulzer, Helmut, 71254 Ditzingen (DE)
(74) Vertreter: Kazi, Ilya

(56) Entgegenhaltungen:
- EP-A- 0 661 900
- US-A- 5 959 988
- LE ROUX A ET AL: "PACKET MODE DATA COMMUNICATIONS IN NUMERIS, THE FRENCH ISDN" IEEE COMMUNICATIONS MAGAZINE, IEEE SERVICE CENTER. PISCATAWAY, N.J, US, Bd. 28, Nr. 11, 1. November 1990 (1990-11-01), Seiten 59-64, XP000172951 ISSN: 0163-6804

## Beschreibung

Die Erfindung betrifft ein Verfahren zum Betreiben eines Telekommunikationssystems mit einer Vermittlungseinrichtung und mit Teilnehmerkanälen, über die digitale Daten in Form von Datenpaketen übertragbar sind, die jeweils eine Zieladresse enthalten.

Derartige digitale Telekommunikationssysteme sind als ISDN-Systeme bekannt und bieten neben der Möglichkeit der Übertragung digitaler Daten auch die Möglichkeit der Sprachübertragung. Diese zuletzt genannte Möglichkeit ist für den Kern der Erfindung jedoch nicht unbedingt erforderlich. Bekannte Telekommunikationssysteme mit einer Vermittlungseinrichtung sind normalerweise so dimensioniert, daß nicht sämtliche Teilnehmer gleichzeitig eine Verbindung zur Vermittlungseinrichtung und zu anderen Teilnehmern herstellen können, sondern die Kapazität der Vermittlungseinrichtung hinsichtlich gleichzeitig durchschaltbarer Kanäle ist kleiner als die Anzahl der angeschlossenen Teilnehmer. Dies kann bei der Übertragung digitaler Daten, insbesondere wenn für diese Übertragung die Dauer der einzelnen Verbindung im Vergleich z.B. zu der Dauer üblicher Telefongespräche lang ist, dazu führen, daß der Zugang zur Vermittlungseinrichtung zeitweise nicht möglich ist, weil alle zur Vermittlungseinrichtung führenden Kanäle belegt sind.

EP-A-O, 661, 900 offenbart eine Paketsteuerungseinrichtung, die Paketdaten von ISDN-Teilnehmern innerhalb des STM-Vermittlungsystems an zentraler Stelle konzentriert und an ein Paketvermittlungssystem weiterleitet bzw. vom Paketvermittlungssystem erhaltene Paketdaten auf die entsprechenden ISDN-Teilnehmer verteilt.

"Packet Mode Data Communications in NUMERIS, the French ISDN", Le Roux *et al*., beschreibt Methoden zur Datenvermittlung in NUMERIS, und offenbart unter anderem einen Frame Service Handler (FSH) welches die Konzentration von Rahmen (frames) auf eine reduzierte Anzahl von digitalen Verbindungen realisiert.

Der Erfindung liegt die Aufgabe zugrunde, eine Möglichkeit zu schaffen, den genannten Nachteil zu mildern.

Diese Aufgabe wird gemäß der Erfindung durch ein Verfahren, System, bzw. eine Konzentrationsvorrichtung gemäß einem der unabhängigen Ansprüche gelöst.

Wenn die Erfindung bei einem ISDN-Netz verwirklicht ist, bei dem ein Teilnehmerkanal eine Kapazität von 64 Kilobit (kb) hat, so wird demnach bei der Erfindung vorgesehen, daß digitale Daten unterschiedlicher Teilnehmer quasi, simultan auf einem einzigen derartigen Kanal von 64 kb konzentriert werden, und dieser einzige Kanal benötigt dann auch nur im wesentlichen diejenigen technischen Einrichtungen in der Vermittlungseinrichtung, die für ein einziges Telefongespräch erforderlich sind, was im folgenden etwas vereinfacht als ein einziger Koppelnetzpunkt bezeichnet wird. Vereinfacht ist diese Ausdrucksweise deshalb, weil ein einziges Telefongespräch von einem Teilnehmer zu einem anderen Teilnehmer meist eine Vielzahl von technischen Einrichtungen, die jeweils einen Koppelnetzpunkt bilden, in ein und derselben Vermittlungseinrichtung nacheinander durchlaufen muß, wie allgemein bekannt ist.

Die Anordnung kann so getroffen sein, daß im einfachsten Fall jeglicher Verkehr von digitalen Daten (insbesondere Computerdaten) im Gegensatz zu Telefongesprächen soweit wie möglich auf einen einzigen Teilnehmerkanal konzentriert wird. Dies mag z.B. ausreichend sein, wenn diese Daten von der ersten Vermittlungsstelle, bei der sie eintreffen, an eine von vornherein bekannte weitere Datenübermittlungseinrichtung weitergeschaltet werden.

Bei einer bevorzugten Ausführungsform der Erfindung ist jedoch die Konzentrationsvorrichtung derart ausgebildet, daß sie Datenpakete in Abhängigkeit von einer Zieladresse zusammenfaßt. Der Begriff Zieladresse wird in diesem Zusammenhang sehr allgemein verstanden. Es kann dies z.B. die Telefonnummer eines bestimmten Diensteanbieters (Service Provider) sein, der den Zugang zum Internet bereitstellt. Es kann auch ein für mehrere Diensteanbieter gemeinsamer Teil der jeweiligen Telefonnummer sein, wenn beispielsweise die Telefonnummern verschiedener Diensteanbieter, die insgesamt (ohne Ortsvorwahl) beispielsweise 5 Ziffern umfassen mögen, sich in den ersten drei Ziffern nicht unterscheiden. Es mag sich auch um eine Vorwahl handeln, die dafür sorgt, daß die Daten zu einer speziellen an einem anderen Ort befindlichen Vermittlungseinrichtung insgesamt weitergeleitet werden, oder um eine Vorwahl, die dafür sorgt, daß die geschilderte Konzentration der Daten verschiedener Teilnehmer in der genannten ersten Vermittlungseinrichtung überhaupt erfolgt und dabei möglicherweise gebührenmäßig begünstigt ist; dagegen erfolgt in einem solchen Fall ohne Verwendung der genannten Vorwahl beispielsweise eine Konzentration nicht und der betreffende Teilnehmer wird mit höheren Gebühren belastet.

Zur Vollständigkeit sei erwähnt, daß man im allgemeinen wohl annehmen kann, daß die tatsächliche Adresse des gewünschten Internetteilnehmers nicht von der genannten Konzentrationsvorrichtung ausgewertet wird und auch nicht Teil der vom Teilnehmer gewählten Telefonnummer ist, sondern in einem der Datenpakete der Datenübermittlung enthalten ist. Auch mag es sein, daß es sich bei der genannten Zieladresse nicht um eine tatsächliche Adresse oder einen Teil von dieser handelt, sondern um eine von der genannten Vermittlungseinrichtung oder einer anderen Vermittlungseinrichtung zugeordnete logische Adresse, die während eines bestimmten Zeitabschnitts der Datenübertragung beibehalten wird, und beispielsweise lediglich beinhaltet, daß es sich um den Teilnehmer Nr. 10 handelt, der im Augenblick Daten zusammen mit anderen Teilnehmern über einen einzigen Teilnehmerkanal der Vermittlungseinrichtung zuführt. Diese Information reicht aus, um die Daten dieses speziellen Teilnehmers nach dem Durchlaufen der Vermittlungseinrichtung in der richtigen Weise weiter zu bearbeiten und weiterzuleiten.

Die durch einen oder mehrere nacheinander von den Daten zu durchlaufenden Koppelnetzpunkte bilden eine semipermanente Verbindung, das heißt, sie bleiben über längere Zeit, unter Umständen über Tage oder Wochen, in einer bestimmten Schaltstellung. Da mehrere Teilnehmer gleichzeitig Daten übertragen und dabei auch noch ein weiterer Teilnehmer hinzukommen kann, wird im Gegensatz zu einem Telefongespräch nicht für jeden Teilnehmer separat ein Weg durch des Koppelnetzwerk hindurchgeschaltet.

Die Erfindung kann mit unterschiedlicher Perfektion verwirklicht sein. Bei einer ersten Stufe wird eine gewisse Anzahl von B-Kanälen, auf denen Datenpaketverkehr herrscht, im Beispiel von 32 B-Kanälen, auf einen sogenannten reservierten Kanal (das heißt: für komprimierte Daten reserviert, also kein nur einem einzigen Teilnehmer zugeordneter B-Kanal) mit einer Kapazität von 32x64 Kilobit konzentriert, ohne daß dabei beachtet wird, ob die einzelnen B-Kanäle über längere Zeit, beispielsweise eine Sekunde, sehr viele Daten übertragen, oder nur sehr wenige. Bei dieser Ausführungsform der Erfindung ergibt sich der Vorteil, daß zum Durchschalten durch eine Verbindungseinrichtung lediglich ein einziger Koppelnetzpunkt erforderlich ist. Es wird daher die Kapazität der Vermittlungseinrichtung in stark verbesserter Weise ausgenutzt.

Bei einer zweiten Perfektionierungsstufe der Erfindung wird noch beachtet, ob und welche B-Kanäle gerade viele beziehungsweise wenige Daten übertragen. Dabei werden bei einer Ausführungsform der Erfindung acht B-Kanäle gleichzeitig beobachtet. Wird angenommen, daß bei einer genügend großen Anzahl von B-Kanälen, zum Beispiel den genannten acht Kanälen, im Durchschnitt innerhalb kurzer Zeiten, die durch Pufferung der Daten in der Vermittlungseinrichtung überbrückt werden können, jeder B-Kanal nicht stärker als mit 50 % seiner Kapazität ausgenutzt wird, so können die genannten acht B-Kanäle auf vier reservierte Kanäle, die jeweils die Kapazität eines einzigen B-Kanals haben, konzentriert werden. Dabei sind diese vier genannten reservierten Kanäle dann mit 100 % ihrer Datenübertragungskapazität ausgenutzt, wenn die genannte acht zugeordneten B-Kanäle jeweils mit 50 % ihrer Kapazität ausgenutzt werden. Es kann eine Vielzahl solcher Gruppen von acht B-Kanälen auf jeweils vier reservierte Kanäle konzentriert werden, und 32 dieser reservierten Kanäle können dann auf einen einzigen Kanal mit 2 Megabit Bandbreite konzentriert werden, der wiederum über einen einzigen Koppelnetzpunkt der Vermittlungseinrichtung durchgeschaltet wird. Auf diese Weise können unter Berücksichtigung der Tatsache, daß die einzelnen B-Kanäle im genannten Beispiel nicht ständig Daten transportieren, insgesamt 64 B-Kanäle gleichzeitig durch einen einzigen Koppelnetzpunkt durchgeschaltet werden. Hier liegt der Vorteil in einer noch besseren Ausnutzung des Koppelnetzwerkes und darüberhinaus in einer besseren Ausnutzung der Datenübertragungskapazität der Kanäle des Telekommunikationssystems.

Der oben genannte Kanal mit einer Kapazität von 2 Megabit (2x1024x1024 Bit) überträgt die einzelnen Datenpakete mit einer Impulsfolgefrequenz, die 32 mal so groß ist wie bei einem B-Kanal. Die Übertragung von Datenpaketen aus einem B-Kanal schließt daher das Zwischenspeichern eines Datenpakets des B-Kanals und daraufhin das Einspeisen dieses Datenpakets in den reservierten Kanal mit dessen Impulsfolgefrequenz ein.

Bei einfachen Ausführungsformen der Erfindung wird ohne Koordinierung versucht, die Daten zwecks Komprimierung in den reservierten Kanal einzuspeisen. Wenn hierbei die eingespeisten Daten mit auf dem reservierten Kanal befindlichen Daten kollidieren, so kann dies in bekannter Weise durch Kollisionsselbsterkennung (collision auto detect) festgestellt werden. Der Versuch des Einspeisens in den reservierten Kanal ist in einem solchen Fall fehlgeschlagen und muß wiederholt werden. Zur optimalen Ausnutzung und schnellstmöglichen Weiterleitung der Datenpakete ist jedoch bei einer bevorzugten Ausführungsform der Erfindung vorgesehen, daß der Datenfluß auf dem reservierten Kanal überwacht wird und das Einspeisen so gesteuert wird, daß eingespeiste Datenpakete möglichst nicht mit anderen Daten kollidieren. Diese Überwachung wird bei erfindungsgemäßen Ausführungsformen des Telekommunikationssystems durch eine Überwachungsvorrichtung bewirkt, die mindestens einen reservierten Kanal und eine Mehrzahl von B-Kanälen beziehungsweise den B-Kanälen zugeordnete Zwischenspeicher, in denen jeweils eines der Datenpakete zur Einspeisung auf einen reservierten Kanal vorrätig gehalten wird, überwacht und ein Einspeisen der Datenpakete auf den überwachten reservierten Kanal dann veranlaßt, wenn dies gerade möglich ist. Bei einem derartigen Vorgehen und einer derartigen Anordnung kann auch einer raschen Änderung, insbesondere einer raschen Zunahme des Datenverkehrs auf den B-Kanälen Rechnung getragen werden. Daneben kann Kollisionserkennung trotzdem noch nützlich sein.

Bei einer Ausführungsform der Erfindung weist das System eine Verteilvorrichtung auf, die zusammengefaßte Datenpakete auf mehrere Kanäle, z.B. Teilnehmerkanäle aufteilt, wobei dies insbesondere dazu dienen kann, die Datenpakete mindestens einem durch eine Zieladresse bestimmten Teilnehmer oder Diensteanbieter zuzuleiten. Dieser kann sich entweder an einem anderen Ort als der die digitale Daten absendende Teilnehmer befinden oder er wird von der obengenannten Koppeleinrichtung unmittelbar erreicht.

Bisher wurden lediglich die Daten betrachtet, die von einem Teilnehmer in Richtung z.B. zum Internet abgesendet werden. Die verschiedenen Teile der Verbindungseinrichtung und die Konzentrationsvorrichtung sind jedoch zweckmäßig so ausgebildet, daß sie auch Daten, die in Gegenrichtung fließen, dem jeweiligen Teilnehmer zuführen, wie dies auch der Fall ist, wenn in herkömmlicher Weise jedem Teilnehmer für seine Datenübertragung ein eigener Teilnehmerkanal für die gesamte Datenübertragung zugeordnet wird.

Weitere Merkmale und Vorteile der Erfindung ergeben sich aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können hier einzeln für sich oder zu mehreren in beliebiger Kombination bei einer Ausführungsform der Erfindung verwirklicht sein.

Es zeigen:
Fig. 1 eine schematische Darstellung eines erfindungsgemäßen Telekommunikationssystems,
Fig. 2 eine schematische Darstellung einer Konzentrationsvorrichtung.

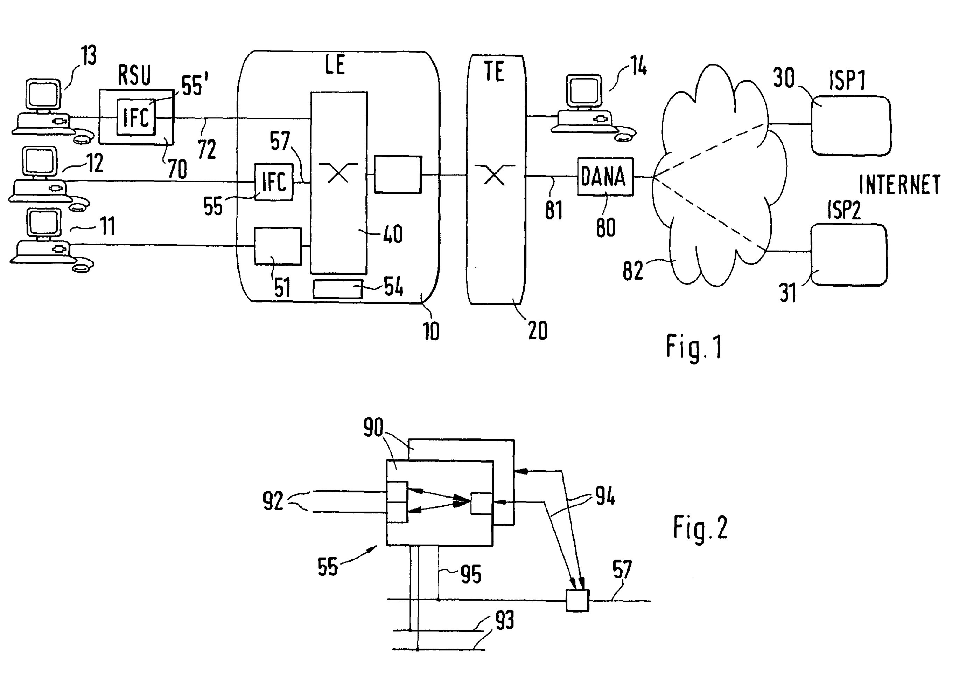

Fig. 1 zeigt schematisch ein
ISDN-Telekommunikationssystem, zu dem eine örtliche Vermittlungseinrichtung 10 (Local Exchange) gehört, an die eine Mehrzahl von Teilnehmern angeschlossen ist. Die Vielzahl der an die Vermittlungseinrichtung 10 angeschlossenen Teilnehmer ist durch drei Teilnehmerendgeräte 11, 12 und 13 symbolisiert, die als Computer dargestellt sind. Die Vermittlungseinrichtung 10 ist mit einem nationalen Vermittlungsnetzwerk 20 (TE) verbunden. Im Beispiel befindet sich der Zugang zu mehreren Diensteanbietern 30 und 31 (ISP1 und ISP2, Internet-Service-Provider), die für die Teilnehmer einen Zugang zu einem Computernetzverbund, im Beispiel zum Internet, bereitstellen, an einem Ort, der von der Vermittlungseinrichtung 10 weit entfernt ist. Daher ist dieser Zugang mit der Vermittlungseinrichtung 10 nicht unmittelbar verbunden ist, sondern über das Vermittlungsnetzwerk 20. Bei dem gezeigten System handelt es sich um ein ISDN-System, das im Verkehr zwischen den Teilnehmern und der örtlichen Vermittlungseinrichtung 10 das Protokoll DSS1 und im Verkehr zwischen Vermittlungseinrichtungen das Protokoll Nummer 7 verwendet. Die Signalisierung zwischen den Teilnehmern und der diesen zugeordneten Vermittlungseinrichtung erfolgt über den D-Kanal. Die Übertragung von Telefongesprächen oder digitalen Nutzdaten erfolgt über einen B-Kanal mit einer Übertragungskapazität von 64 Bit pro Sekunde (bps). Die Daten werden dabei in Form von Datenpaketen übertragen, die eine Zieladresse irgendeiner Art enthalten und durch diese identifizierbar sind. Im allgemeinen sind jedem Teilnehmer 2 B-Kanäle zugeordnet. Es wird hier jedoch nur ein einziger B-Kanal jedes Teilnehmers betrachtet.

Die Vermittlungseinrichtung 10 enthält ein Koppelnetz 40 mit einer Vielzahl von Koppelnetzpunkten, die jeweils zum Durchschalten eines einzigen Kanals dienen, jedenfalls dann, wenn über die Kanäle Telefongespräche oder analoge Daten (über Modem) übertragen werden. Dann unterscheidet sich die Arbeitskräfte der Vermittlungseinrichtung nicht von der seither üblichen Funktion. Nachfolgend wird vereinfachend davon gesprochen, daß ein Telefongespräch oder eine andere Verbindung durch "einen" Koppelnetzpunkt durchgeschaltet wird, obwohl in der Realität ein solcher Kanal im allgemeinen über mehrere Koppelnetzpunkte durchgeschaltet wird.

Über das Endgerät 11 wird gerade ein ISDN-Telefongespräch geführt. Vor Beginn des Geschäfts hatte der Teilnehmer den Telefonhörer abgenommen und die gewünschte Telefonnummer gewählt. Diese Informationen wurden der Vermittlungseinrichtung 10 durch den D-Kanal mitgeteilt, und die Vermittlungseinrichtung hat den B-Kanal des Endgeräts 11 an eine bestimmte Eingangsschaltung 51 aus einer Vielzahl solcher Schaltungen vor dem Koppelnetz 40 angeschaltet, von wo aus dieser B-Kanal entsprechend der gewählten Telefonnummer durch das Koppelnetz in herkömmlicher Weise durchgeschaltet wird.

Vom Endgerät 12 war der Vermittlungseinrichtung 10 zu Beginn der Verbindung über den D-Kanal mitgeteilt worden, daß digitale Daten in Paketform zum Diensteanbieter 30 (ISP1) übertragen werden sollen. Aus der gewählten Telefonnummer dieses Diensteanbieter erkennt eine Überwachungsvorrichtung 54 in der Vermittlungseinrichtung 10, daß diese Daten auf einen für konzentrierte Daten reservierten Kanal konzentriert werden sollen. Die Vermittlungseinrichtung 10 hat daraufhin den B-Kanal des Endgeräts 12 mit einer Konzentrationsvorrichtung 55 (Internet-Rahmen-Konzentrator, Internet Frame Concentrator, IFC) aus einer Vielzahl solcher Vorrichtungen verbunden und der Konzentrationsvorrichtung 55 mitgeteilt, daß die Datenpakete konzentriert werden sollen. (Telefongespräche werden ebenfalls dem Eingang der Konzentrationsvorrichtung zugeführt, in dieser aber nicht konzentriert, sondern in nicht gezeigter Weise über einen B-Kanal dem Koppelnetz 40 zugeführt.) In der Zeichnung ist angedeutet, daß mit dem Eingang der Konzentrationsvorrichtung 55 insgesamt acht B-Kanäle verbunden werden können.

Die Konzentrationsvorrichtung 55 ist so ausgebildet, daß sie die Datenpakete von acht B-Kanälen auf einen einzigen Kanal 57 mit einer Kapazität von 2 Megabit zusammenfaßt. Dieser Kanal 57 wird von dem Koppelnetz als Einheit durchgeschaltet, also durch einen einzigen Koppelnetzpunkt im theoretisch einfachsten Fall.

Bekannte Koppelnetze haben im Normalfall die Fähigkeit, Kanäle mit 2 Megabit Bandbreite durchzuschalten. Wo dies nicht der Fall ist, kann die erforderliche Bandbreite möglicherweise einfach durch zusätzliche Verstärker, erforderlichenfalls in Kombination mit Filtern, bereitgestellt werden.

Die Konzentration mehrerer B-Kanäle auf einen einzigen Kanal bewirkt eine bessere Ausnutzung des Koppelnetzes 40, weil ohne eine derartige Konzentration mehr Koppelnetzpunkte benötigt werden als mit der geschilderten Konzentration. Eine derartige Konzentration ist jedenfalls dann sinnvoll, wenn die Daten der genannten B-Kanäle zu einer einzigen Zieladresse gelangen sollen, z.B. zu dem Diensteanbieter 30. Wenn sich die Diensteanbieter 30 und 31 in dem gleichen, von der Vermittlungseinrichtung 10 weit entfernten Ort befinden, ist das Konzentrieren mehrerer B-Kanäle mit Daten für diese zwei Diensteanbieter auf einen einzigen Kanal ebenfalls sinnvoll. Es muß dann nur an dem genannten entfernten Ort, genauer in dessen Vermittlungseinrichtung, eine Verteilung auf die beiden genannten Diensteanbieter 30 und 31 erfolgen, die bei der herkömmlichen Technik die Anrufe von Teilnehmern, die den Zugang zum Internet wünschen, auf einer Vielzahl von Kanälen, die je einem einzigen Teilnehmer zugeordnet sind, erwarten.

Hierzu können die 2-Megabit-Kanäle durch geeignete Einrichtungen in einzelne B-Kanäle aufgeteilt werden, die dann anschließend mit je einem aus einer Vielzahl von Telekommunikations-Anschlüssen des jeweiligen Diensteanbieters verbunden werden.

Es versteht sich, daß sich die Erfindung auch auf andere Telekommunikationsnetze, die vom geschilderten Netz technisch abweichen, erstreckt.

Die Verbindung des Teilnehmerendgeräts 13 mit der Vermittlungseinrichtung 10 unterscheidet sich vom Teilnehmerendgerät 12 nur dadurch, daß sich die zugeordnete Konzentrationsvorrichtung 55' in einer abgesetzten Teilnehmereinheit (Remote Subscriber Unit, RSU) 70 befindet, die viele Kilometer von der Vermittlungseinrichtung 10 entfernt ist und mit dieser über einen Kanal 72 mit einer Kapazität von 2 Megabit für Nutzdaten verbunden ist. Über den Kanal 72 können auch Steuerungsdaten übertragen werden, die bei Anwahl eines Internet-Diensteanbieters den B-Kanal des Endgeräts 13 an die Konzentrationsvorrichtung 55' anschalten und den Konzentrationsvorgang aktivieren. Bei einer anderen Ausführungsform der Erfindung enthält die Einheit 70 selbst die erforderlichen Einrichtungen, um über das Anschalten an die Konzentrationsvorrichtung 55' zu entscheiden.

Im Beispiel erfolgt die Weiterleitung der Daten zu den Diensteanbietern 30 und 31 über eine Adaptereinheit 80 (Daten-Anwendungs-Netz-Adapter, Data Application Network Adapter, DANA), dem eine Vielzahl von 2-Megabit-Kanälen 81 aus dem Vermittlungsnetzwerk 20 zugeführt werden; nur einer ist gezeigt. Die Adaptereinheit 80 isoliert die einzelnen Paketdaten, und diese werden über ein Frame-Relay-Netz 82 den jeweils gewünschten Diensteanbietern 30 bzw. 31 zugeführt.

Die in Fig. 2 gezeigte Konzentrationsvorrichtung 55 enthält mehrere Baugruppen 90, die jeweils einen Computer enthalten. Jeder Baugruppe 90 sind 8 B-Kanäle 92 auf ihrer Eingangsseite (links in der Fig. 2) zugeführt, zur Vereinfachung sind nur zwei gezeigt. Transportiert ein B-Kanal 92 ein Telefongespräch, so ist die Baugruppe 90 so eingerichtet, daß sie diesen B-Kanal 92 unverändert auf einen zum Koppelnetz (40 in Fig. 1) führenden B-Kanal 93 durchleitet. Handelt es sich um Datenpakete, die konzentriert werden sollen, so arbeitet die Konzentrationsvorrichtung 55 wie folgt: Alle Baugruppen 90, die Daten konzentrieren sollen, überwachen einen weiterführenden Kanal 57, im Beispiel mit einer Kapazität wie ein B-Kanal, aber für Datenkonzentration bestimmt, ob dort gerade Daten übertragen werden. Diese Überwachung ist durch Linien 94 symbolisiert. Wenn dort keine Daten festgestellt werden, sendet diejenige Baugruppe, die dies als erste festgestellt hat, ein Datenpaket eines B-Kanals 92 auf den Kanal 57 über eine Datenleitung 95.

## Patentansprüche

1. Verfahren zum Betreiben eines Telekommunikationssystems mit einer Vermittlungseinrichtung und mit Teilnehmerkanälen, über die digitale Daten in Form von Datenpaketen übertragbar sind, die jeweils eine Zieladresse enthalten, wobei die Datenpakete mehrerer Teilnehmerkanäle zusammengefasst und in einen einzigen weiterführenden Kanal eingespeist werden, **dadurch gekennzeichnet, dass** das Verfahren umfasst:
Überwachen des weiterführenden Kanals um festzustellen ob auf dem weiterführenden Kanal gerade Daten übertragen werden; und
wenn auf dem weiterführenden Kanal keine Daten festgestellt werden, Senden eines Datenpaketes eines Teilnehmerkanals auf den weiterführenden Kanal.

2. Verfahren nach Anspruch 1, **dadurch gekennzeichnet, dass** der weiterführende Kanal durch mehrere Baugruppen (90) einer Konzentrationsvorrichtung (55, 55') überwacht wird, die jeweils Datenpakete mehrerer Teilnehmerkanäle zusammenfassen, und, wenn auf dem weiterführenden Kanal keine Daten festgestellt werden, durch diejenige Baugruppe, die dies als erste festgestellt hat, ein Datenpaket eines Teilnehmerkanals auf den weiterführenden Kanal gesendet wird.

3. Verfahren nach Anspruch 1, **dadurch gekennzeichnet, dass** Datenpakete in Abhängigkeit von einer Zieladresse zusammengefasst werden.

4. Telekommunikationssystem mit Teilnehmerkanälen, über die digitale Daten in Form von Datenpaketen übertragbar sind, die jeweils eine Zieladresse enthalten, und mit einer Vermittlungseinrichtung (10) mit Koppelnetzpunkten, die jeweils einen Teilnehmerkanal auf einen weiterführenden Kanal durchschalten können, insbesondere zur Ausführung des Verfahrens nach Anspruch 1, wobei eine Konzentrationsvorrichtung (55, 55') vorgesehen ist, die Datenpakete mehrerer Teilnehmerkanäle zusammenfasst und in einen einzigen zur Vermittlungseinrichtung weiterführenden Kanal einspeist, der über einen Koppelnetzpunkt durchgeschaltet ist,
**dadurch gekennzeichnet, dass** die Konzentrationsvorrichtung eine Überwachungsvorrichtung aufweist, die den weiterführenden Kanal überwacht und ein Einspeisen der Datenpakete auf den weiterführenden Kanal dann veranlasst, wenn dies gerade möglich ist,
wobei die Überwachungsvorrichtung überwacht, ob auf dem weiterführenden Kanal gerade Daten übertragen werden, und, wenn dort keine Daten festgestellt werden, ein Datenpaket eines Teilnehmerkanals auf den weiterführenden Kanal gesendet wird.

5. System nach Anspruch 4, **dadurch gekennzeichnet, dass** die Konzentrationsvorrichtung mehrere Baugruppen (90) aufweist, die jeweils dazu ausgelegt sind, Datenpakete mehrerer Teilnehmerkanäle zusammenzufassen, wobei jede der Baugruppen den weiterführenden Kanal überwacht und, wenn dort keine Daten festgestellt werden, diejenige Baugruppe, die dies als erste festgestellt hat, ein Datenpaket eines Teilnehmerkanals auf den weiterführenden Kanal sendet.

6. System nach Anspruch 4 oder 5, **dadurch gekennzeichnet, dass** es auch zum Übertragen von Sprachsignalen auf den Teilnehmerleitungen ausgebildet ist.

7. System nach einem der Ansprüche 4 bis 6, **dadurch gekennzeichnet, dass** die Konzentrationsvorrichtung (55, 55') derart ausgebildet ist, dass sie Datenpakete in Abhängigkeit von einer Zieladresse zusammenfasst.

8. System nach einem der Ansprüche 4 bis 7, **dadurch gekennzeichnet, dass** eine Verteilvorrichtung vorgesehen ist, die zusammengefasste Datenpakete auf mehrere Kanäle, z.B. Teilnehmerkanäle, aufteilt, insbesondere um die Datenpakete mindestens einem durch eine Zieladresse bestimmten Teilnehmer oder Diensteanbieter zuzuleiten.

9. System nach einem der Ansprüche 4 bis 8, **dadurch gekennzeichnet, dass** es sich um ein ISDN-System handelt.

10. Konzentrationsvorrichtung, geeignet zur Verwendung bei einem Verfahren nach einem der Ansprüche 1 bis 3 und / oder bei einem System nach einem der Ansprüche 4 bis 9, wobei die Konzentrationsvorrichtung mindestens eine Einrichtung (90) enthält, um zu konzentrierende Daten in Form von Datenpaketen, die an mehreren Teilnehmer-Kanälen (92) eintreffen, auf einen einzigen weiterführenden Kanal (57) zu konzentrieren
**dadurch gekennzeichnet, dass** die Konzentrationsvorrichtung eine Überwachungsvorrichtung aufweist, die den weiterführenden Kanal überwacht und ein Einspeisen der Datenpakete auf den überwachten Kanal dann veranlasst, wenn dies gerade möglich ist,
wobei die Überwachungsvorrichtung überwacht, ob auf dem weiterführenden Kanal gerade Daten übertragen werden, und, wenn dort keine Daten festgestellt werden, ein Datenpaket eines Teilnehmerkanals auf den weiterführenden Kanal gesendet wird.

11. Vorrichtung nach Anspruch 10, **dadurch gekennzeichnet, dass** sie derart umschaltbar ist, dass sie nicht zu konzentrierende Daten auf zugeordnete weiterführende B-Kanäle (93) durchleitet.

## Claims

1. Method of operating a telecommunication system with a switching facility and subscriber channels across which digital data in the form of data packets can be transmitted, each of which contains a destination address, and the data packets of several subscriber channels are combined and fed into a single outgoing channel, **characterised in that** the method comprises:
monitoring the outgoing channel in order to detect whether data is currently being transmitted on the outgoing channel; and
if no data is detected on the outgoing channel, sending a data packet of a subscriber channel onto the outgoing channel.

2. Method as claimed in claim 1, **characterised in that** the outgoing channel is monitored by several modules (90) of a concentrator device (55, 55'), each of which combines data packets of several subscriber channels, and if no data is detected on the outgoing channel, a data packet of a subscriber channel is sent to the outgoing channel by the module which first detected that this was the case.

3. Method as claimed in claim 1, **characterised in that** data packets are combined on the basis of a destination address.

4. Telecommunication system with subscriber channels across which digital data in the form of data packets can be transmitted, each of which contains a destination address, and with a switching facility (10) with coupling network points, each of which is able to switch a subscriber channel to an outgoing channel, in particular for implementing the method as claimed in claim 1, and a concentrator device (55, 55') is provided which combines the data packets of several subscriber channels and feeds them into a single channel which is switched via a coupling network point and outputs to the switching facility,
**characterised in that** the concentrator device has a monitoring device which monitors the outgoing channel and then causes the data packets to be fed onto the outgoing channel if this is currently possible,
and the monitoring device monitors whether data is currently being transmitted on the outgoing channel and if no data is detected, a data packet of a subscriber channel is sent to the outgoing channel.

5. System as claimed in claim 4, **characterised in that** the concentrator device comprises several modules (90), each of which is configured to combine data packets of several subscriber channels, and each of the modules monitors the outgoing channel, and if no data is detected there, the module which first detected this sends a data packet of a subscriber onto the outgoing channel.

6. System as claimed in claim 4 or 5, **characterised in that** it is also designed to transmit speech signals to the subscriber lines.

7. System as claimed in one of claims 4 to 6, **characterised in that** the concentrator device (55, 55') is configured so that it combines data packets on the basis of a destination address.

8. System as claimed in one of claims 4 to 7, **characterised in that** a distributor device is provided, which distributes the combined data packets to several channels, e.g. subscriber channels, in particular in order to route the data packets to at least one subscriber or service provider determined on the basis of a destination address.

9. System as claimed in one of claims 4 to 8, **characterised in that** it is an ISDN system.

10. Concentrator device suitable for use with a method as claimed in one of claims 1 to 3 and/or with a system as claimed in one of claims 4 to 9, which concentrator device contains at least one module (90) for concentrating on a single outgoing channel (57) data arriving on several subscriber channels (92) which has to be concentrated in the form of data packets,
**characterised in that** the concentrator device has a monitoring device which monitors the outgoing channel and causes the data packets to be fed to the monitored channel if this is currently possible,
and the monitoring device monitors whether data is currently being transmitted on the outgoing channel and if no data is detected there, a data packet of a subscriber channel is sent to the outgoing channel.

11. Device as claimed in claim 10, **characterised in that** it can be switched so that it routes data which does not have to be concentrated to associated outgoing B channels (93).

## Revendications

1. Procédé d'exploitation d'un système de télécommunication avec un dispositif de commutation et avec des canaux d'abonnés au moyen desquels des données numériques peuvent être transmises sous forme de paquets de données contenant chacun une adresse de destination, les paquets de données de plusieurs canaux d'abonnés étant regroupés et transférés dans un seul canal consécutif, **caractérisé en ce que** ledit procédé comprend :
la surveillance du canal consécutif, permettant de détecter si des données sont en cours de transmission sur ledit canal consécutif ; et,
l'émission d'un paquet de données d'un canal d'abonné sur le canal consécutif, si des données ne sont pas transmises sur ledit canal consécutif.

2. Procédé selon la revendication 1, **caractérisé en ce que** le canal consécutif est surveillé par plusieurs modules (90) d'un dispositif de concentration (55, 55'), lesquels regroupent chacun les paquets de données de plusieurs canaux d'abonnés, un paquet de données d'un canal d'abonné étant émis sur le canal consécutif si des données ne sont pas détectées sur ledit canal consécutif, par le module ayant procédé le premier à cette détection.

3. Procédé selon la revendication 1, **caractérisé en ce que** les paquets de données sont regroupés en fonction d'une adresse de destination.

4. Système de télécommunication avec des canaux d'abonnés au moyen desquels des données numériques peuvent être transmises sous forme de paquets de données contenant chacun une adresse de destination, et avec un dispositif de commutation (10) présentant des points de couplage de réseau, aptes à commuter chacun un canal d'abonné vers un canal consécutif, notamment pour exécuter le procédé selon la revendication 1, un dispositif de concentration (55, 55') étant prévu, lequel regroupe les paquets de données de plusieurs canaux d'abonnés et les transfère dans un seul canal consécutif menant au dispositif de commutation, lequel est commuté au moyen d'un point de couplage de réseau,
**caractérisé en ce que** le dispositif de concentration comporte un dispositif de surveillance, lequel surveille le canal consécutif et provoque un transfert des paquets de données sur le canal consécutif si cela est possible,
le dispositif de surveillance surveillant si des données sont en cours de transmission sur ledit canal consécutif, un paquet de données d'un canal d'abonné étant émis sur le canal consécutif, si des données n'y sont pas détectées.

5. Système selon la revendication 4, **caractérisé en ce que** le dispositif de concentration comporte plusieurs modules (90) conçus pour regrouper chacun les paquets de données de plusieurs canaux d'abonnés, chaque module surveillant le canal consécutif, et un paquet de données d'un canal d'abonné étant émis sur le canal consécutif si des données n'y sont pas détectées, par le module ayant procédé le premier à cette détection.

6. Système selon la revendication 4 ou la revendication 5, **caractérisé en ce qu'**il est également prévu pour la transmission de signaux vocaux sur les lignes d'abonnés.

7. Système selon l'une des revendications 4 à 6, **caractérisé en ce que** le dispositif de concentration (55, 55') est réalisé de manière à regrouper les paquets de données en fonction d'une adresse de destination.

8. Système selon l'une des revendications 4 à 7, **caractérisé en ce qu'**il est prévu un dispositif distributeur qui répartit les paquets de données regroupés sur plusieurs canaux tels que des canaux d'abonnés, notamment pour acheminer les paquets de données vers au moins un abonné ou prestataire de services défini par une adresse de destination.

9. Système selon l'une des revendications 4 à 8, **caractérisé en ce qu'**il s'agit d'un système ISDN.

10. Dispositif de concentration, apte à être utilisé dans le cadre d'un procédé selon l'une des revendications 1 à 3 et/ou d'un système selon l'une des revendications 4 à 9, ledit dispositif de concentration comprenant au moins un dispositif (90) destiné à concentrer sur un seul canal consécutif (57) des données à concentrer se présentant sous la forme de paquets de données arrivant sur plusieurs canaux d'abonnés (92),
**caractérisé en ce que** ledit dispositif de concentration comporte un dispositif de surveillance, lequel surveille le canal consécutif et provoque un transfert des paquets de données sur le canal surveillé si cela est possible,
le dispositif de surveillance surveillant si des données sont en cours de transmission sur le canal consécutif, un paquet de données d'un canal d'abonné étant émis sur le canal consécutif si des données n'y sont pas détectées.

11. Procédé selon la revendication 10, **caractérisé en ce qu'**il est commutable de manière à transférer les données qui ne sont pas à concentrer vers des canaux B consécutifs (93) correspondants.
